# EUROPEAN PATENT APPLICATION

(11) **EP 1 788 098 A1**
(43) Date of publication of application: **23.05.2007**
(21) Application number: 06114113.1
(22) Date of filing: 17.05.2006
(51) Int. Cl.: C12Q 1/68

(54) **Design of capture molecules for the detection of amplicons with high sensitivity**

(30) Priority: 18.11.2005 WO PCT/EP2005/012382
(71) Applicant: Eppendorf Array Technologies SA, 5000 Namur (BE)
(72) Inventor: Hamels, Sandrine, B-1474 Ways (BE); Remacle, Jose, B-5020 Malonne (BE)
(74) Representative: Rasser, Jacobus Cornelis

(57) **Abstract**

The invention relates to a method for the design and/or the preparation of a polynucleotide capture molecule for detecting an amplicon having one strand serving as target to be detected and/or quantified after hybridization on said capture molecule, comprising the steps of:
a) selecting a primer pair defining the amplicon;
b) selecting a specific sequence of 10 to 100 nucleotides within the amplicon, such that said specific sequence defines two non-complementary ends of the amplicon;
c) defining the capture molecule having a capture portion that is complementary to the specific sequence selected in step b), and a spacer portion comprising at least 20 nucleotides;
d) identifying among the two non-complementary ends of the amplicon a spacer end and a non-spacer end, respectively, such that the spacer end is non-complementary to the spacer portion of the capture molecule, and said spacer end exceeds said non-spacer end by at least 50 bases.

## Description

### BACKGROUND OF THE INVENTION

### 1. Field of the Invention

The present invention is in the field of diagnosis and is related to a method for the design and/or the preparation of capture molecules for use in the detection and/or quantification of nucleotide sequences potentially present in a sample after or during the amplification by a primer pair.

The capture molecules designed by the method of the invention are especially suited for the identification and/or quantification of micro-organisms of the same genus or family or for the detection and/or quantification of related genes in a specific organism present in a biological sample.

### 2. Description of the Related Art

The development of the biochips technology allows the detection of multiple nucleotide sequences simultaneously in a given assay, and thus allows the identification of the corresponding organisms or parts of an organism. Arrays are solid supports containing on their surface a series of discrete regions bearing capture molecules (or probes) that are able to bind (by hybridisation) to a corresponding target nucleotide sequence(s) possibly present in a sample to be analysed. If the target sequence is labeled with modified nucleotides during a reverse transcription or during amplification of said sequence, a signal can be detected and measured at the binding location. Its intensity gives an estimate of the amount of target sequence present in the sample. Such technology allows the identification and/or quantification of species or genes for diagnostic or screening purpose.

The Company Affymetrix Inc. has developed a method for direct synthesis of oligonucleotides upon a solid support, at specific locations, by using masks at each step of the processing. Said method comprises the addition of a new nucleotide to a growing oligonucleotide in order to obtain a desired sequence at a desired location. This method is derived from the photolithographic technology and is coupled with the use of photoprotective groups, which are released before a new nucleotide is added (EP-A1 -0476014, U.S. Pat. No. 5,445,934, U.S. Pat. No. 5,143,854 and U.S. Pat. No. 5,510,270). However, only small oligonucleotides are present on the surface, and said method finds applications mainly for sequencing or identifying a pattern of positive spots corresponding to each specific oligonucleotide bound on the array. The characterization of a target sequence is obtained by comparison of such pattern with a reference. Said technique was applied to the identification of Mycobacterium tuberculosis *rpoB* gene (WO97/29212 and WO98/28444), wherein the capture molecule comprises less than 30 nucleotides and from the analysis of two different sequences that may differ by a single nucleotide (the identification of SNPs or genotyping). Small capture molecules (having a length comprised between 10 and 20 nucleotides) are preferred since the discrimination between two oligonucleotides differing in one base is higher when their length is smaller.

The limitation of the method is illustrated by the fact that it cannot directly detect amplicons resulting from genetic amplification (PCR). Detection is only possible after double amplification with primer(s) bearing a T3 or T7 sequence and then a reverse transcription into single strand RNA with a RNA polymerase. These RNA sequences are cut into pieces of about 40 bases before being detected on an array (example 1 of WO 97/29212). Long DNA or RNA fragments hybridize very slowly or not at all on capture molecules present on the surface. Said methods are therefore complicated for detection of homologous sequences since the homology varies along the sequences, so that part of the pieces could hybridize on the same capture molecules. Therefore, the method requires complex computer software to reconstitute the sequences and for the interpretation of the results.

For a gene expression array that is based on the cDNA copy of mRNA the same problem is encountered when using small capture molecule arrays: the rate of hybridisation is low. Therefore, the fragments are cut into smaller species and the method requires the use of several capture molecules in order to obtain a pattern of signals attesting to the presence of a given gene (WO97/10364 and WO97/27317). This cutting also decreases the number of labeled nucleotides, and thus reduces the obtained signal. In this case, the use of long capture molecules gives a much better sensitivity to the detection. In the many gene expression applications, the use of long capture molecules is not a problem when cDNA to be detected originates from genes having different sequences, since there are no cross-reactions between them. Long capture molecules give the required sensitivity, however, they can not be used when the possibility exists for the presence of homologous sequences since they will hybridized on the same capture molecule making the detection non specific.

The use of membranes and nylon supports has been proposed to increase the sensitivity of the detection on solid support by incorporation of a spacer between the support and the capture molecules. Van Ness et al. (Nucleic Acids Research, Vol. 19, p.3345, 1991) describe a poly(ethyleneimine) arm for the binding of DNA to nylon membranes. European Patent Application EP-0 511 559 describes a hexaethylene glycol derivative as spacer for the binding of small oligonucleotides to a membrane. When membranes such as nylon are used as support, there is no control of the site of binding between the solid support and the oligonucleotides. It has been observed that a polydT tail increased the fixation yield and so the resulting hybridization (WO089/11548). Similar results are obtained with repeated capture sequences present in a polymer (U.S. Pat. 5,683,872).

Guo et al. (Nucleic Acids Research, Vol. 22, p.5456, 1994) teach the use of polydT of 15 bases as spacer for the binding of oligonucleotides on glass with increased sensitivity of hybridization.

PCT Application WO99/16780 describes the detection of 4 homologous sequences of the gene *FemA* on nylon strips. However, no data on the sensitivity of the method and the detection is presented. In said document, the capture molecules comprise between 15 and 350 bases with homology less than 50% with a consensus sequence.

The publication of Anthony et al. (Journal of clinical microbiology, Vol.3 8, p.7817, 2000) describes the use of a membrane array for the discrimination with low sensitivity of homologous sequences originating from several related organisms. Targets to detect are rDNA amplified from bacteria by consensus PCR, and the detection is obtained on nylon array containing capture molecules for said bacteria and having the capture molecules having between 20 and 30 bases that are covalently linked to the nylon. There is no control of the portion of the sequence that is available for hybridization.

The publication of Peytavi et al. (BioTechniques, Vol. 39, p.89, 2005) discusses experiments conducted on the hybridization efficiency of the 402 and 432 bp ermB products to 20-mer oligonucleotide capture molecules. The reported results indicate that a free 5' overhanging tail destabilizes the captured strand, due to reassociation with the second amplicon strand.

Accordingly, there is a continuing need for a method for designing capture molecules for high yield and high speed detection on immobilized capture molecules of double stranded amplified sequences present in a solution, while keeping the specificity of the detection. The design method should also take into consideration the constraints imposed by the choice of the primer pair.

The present invention responds to all these constraints by proposing a simple and effective method for designing capture molecules for the detection of PCR amplified sequences on immobilized capture molecules.

### PURPOSE OF THE INVENTION

The present invention aims to provide a new method for the design and/or the preparation of capture molecules for use in an easy identification (detection and/or quantification) of a large number of (micro)organisms or portions of (micro)organisms after or during the amplification by a primer pair.

A further aim of the invention is to allow a simplified technology requiring the use of single primer(s) in an amplification step and which allow the identification (detection and/or quantification) of a specific target sequence by the identification and/or recording of a single spot signal upon said micro-array, said signal resulting only from the specific binding of the target sequence with its corresponding capture molecule.

### BRIEF SUMMARY OF THE INVENTION

The present invention relates, in one embodiment, to a method for designing a polynucleotide capture molecule for detecting an amplicon having one strand serving as target to be detected and/or quantified after hybridization on said capture molecule, said method comprising the steps of:
a) selecting a primer pair defining the amplicon;
b) selecting a specific sequence of 10 to 100 nucleotides within the amplicon, such that said specific sequence defines two non-complementary ends of the amplicon;
c) defining the capture molecule having a capture portion that is complementary to the specific sequence selected in step b), and a spacer portion comprising at least 20 nucleotides;
d) identifying among the two non-complementary ends of the amplicon a spacer end and a non-spacer end, respectively, such that the spacer end is non-complementary to the spacer portion of the capture molecule, and said spacer end exceeds said non-spacer end by at least 50 bases.

In another embodiment the present invention relates to a method for preparing a polynucleotide capture molecule for detecting an amplicon having one strand serving as target to be detected and/or quantified after hybridization on said capture molecule, said method comprising the steps of:
a) selecting a primer pair defining the amplicon;
b) selecting a specific sequence of 10 to 100 nucleotides within the amplicon, such that said specific sequence defines two non-complementary ends of the amplicon;
c) defining the capture molecule having a capture portion that is complementary to the specific sequence selected in step b), and a spacer portion comprising at least 20 nucleotides;
d) identifying among the two non-complementary ends of the amplicon a spacer end and a non-spacer end, respectively, such that the spacer end is non-complementary to the spacer portion of the capture molecule, and said spacer end exceeds said non-spacer end by at least 50 bases
e) synthesizing the capture molecule.

In yet another embodiment the invention relates to a capture molecule obtainable by the above-described method.

In a fourth embodiment the invention relates to a kit for use in a method for detecting an amplicon, said kit comprising the capture molecule designed by the method of this invention.

### BRIEF DESCRIPTION OF THE DRAWINGS

The features and advantages of the invention will be appreciated upon reference to the following drawings, in which:

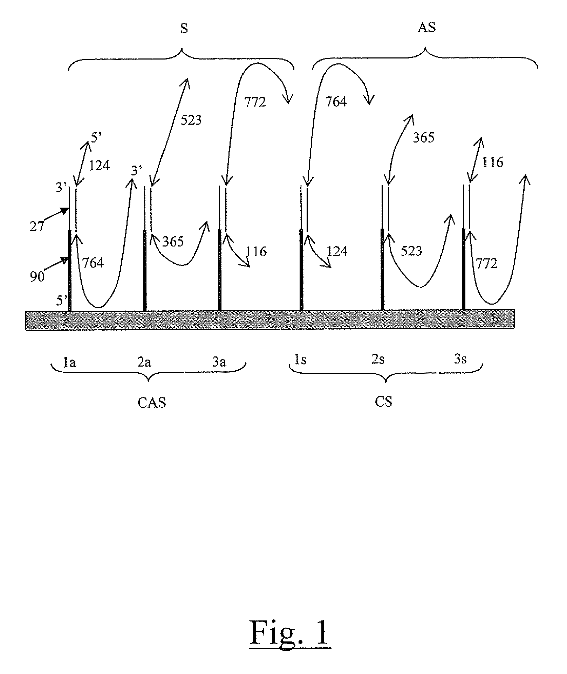

Figure 1 represents the position of different capture molecules in the target amplicon strand used for assay in the example 1. The figure represents the position of the sense target strand (S) on capture molecule having a complementary antisense specific capture portion (CAS) and the position of the antisense target (AS) on the capture molecule having a complementary sense specific capture portion (CS). The lengths (nucleotides) of the free non-spacer end and the free spacer end are indicated for each configuration. The direction 5' to 3' of the amplicon and the capture molecule strands is the same for all the represented interactions. The different capture molecules have the same length for their spacer portion (90 nucleotides) and their capture portion (27 nucleotides).

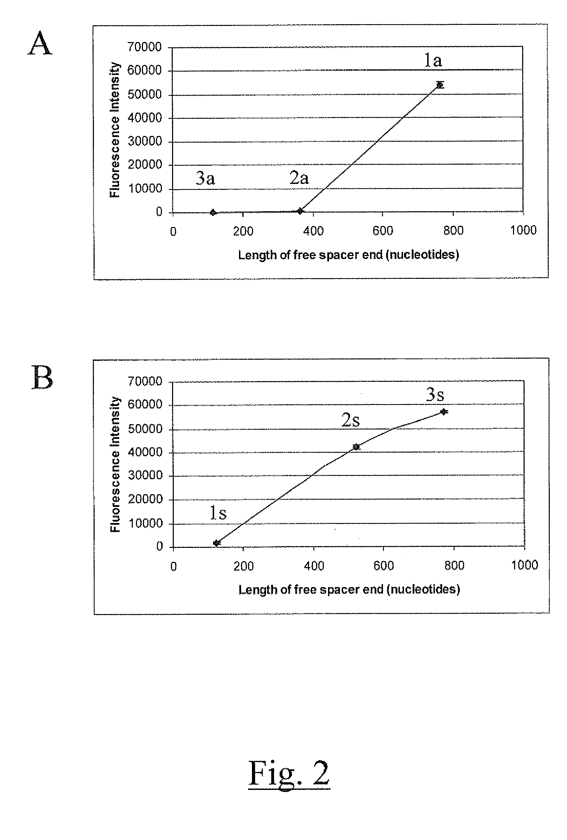

Figure 2 depicts the correlation between the fluorescence intensity and the length of the free spacer end (nucleotides) of the sense target strand (figure 2A) and antisense strand (figure 2B) on their respective capture molecules (1a, 2a, 3a) and (1s, 2s, 3s). The design of the experiment is presented in figure 1.

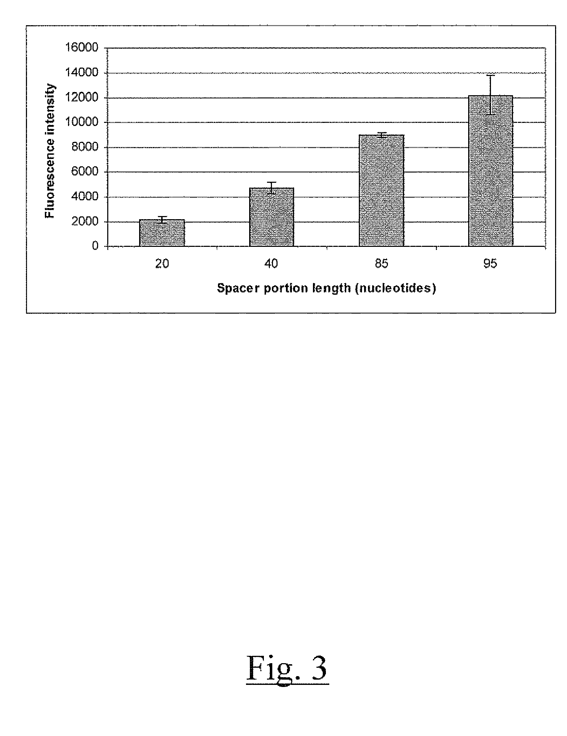

Figure 3 shows the effect of the spacer portion length (nucleotides) on the hybridization yield (fluorescence intensity) as provided in example 2. The experiment was performed with capture molecule having the design of the present invention with different spacer portion lengths. The spacer portion length ranges from 20 to 95 nucleotides with a constant capture portion of 27 bases specific of the target molecule.

### DESCRIPTION OF ILLUSTRATIVE EMBODIMENTS

The following is a description of certain embodiments of the invention, given by way of example only and with reference to the drawings.

The terms "nucleic acid", "oligonucleotide", "array", "probe", "target nucleic acid", "bind substantially", "hybridising specifically to", "background", and "quantifying" are as described in the international patent application WO97/27317, incorporated herein by reference.

The terms "nucleotide triphosphate", "nucleotide", and "primer sequence" are as described in the document WO00/72018, incorporated herein by references.

The terms "Homologous sequences" and "consensus sequence" are described in the European patent application WO01/77372, incorporated herein by reference. The term "homology" is intended to mean the degree of identity of one polynucleotide sequence to another polynucleotide sequence. There may be complete homology (i.e. 100% identity) between two or more polynucleotides. The degree of homology is calculated after alignment of the sequence and may be determined by any method well known to a person skilled in the art.

As used herein, "capture molecule" refers to a molecule, or complex or combination of molecules, that is capable of specifically binding to one target molecule, or to a family of target molecules, or to one or more member (s) of a plurality of target molecules, or portion(s) thereof. The capture molecules are preferably nucleic acids, which are either synthesized chemically *in situ* on the surface of the support, synthesized *ex situ* and subsequently affixed to the support. Nucleic acid binding is achieved via base pairing between two polynucleotides, one being the immobilized capture molecule and the other one the target to be detected. Capture molecules also comprise derivatives of the nucleic acid, such as PNA or LNA, as long as they can bind specifically the target polynucleotide molecule.

The term "single capture molecule species" is a composition of related polynucleotides for the detection of a given sequence by base pairing hybridization or by molecular recognition between polypeptides or proteins. Polynucleotides are synthesized either chemically or enzymatically, or isolated from samples, but the synthesis or isolation is not always perfect and the capture molecule is contaminated with other related molecules, like shorter polynucleotides. The essential characteristic of one capture species for the invention is that the overall species can be used for capture of a given target nucleotide molecule.

The term "polynucleotide sequences that are complementary to one or more genes or to the genome sequence" described herein, refers to polynucleotides that are capable of hybridizing under stringent conditions to at least part of the nucleotide sequence of said genes or genome or copy thereof. Polynucleotides also include oligonucleotides (comprising more than 2 bases but fewer than 100 bases), which can be used under particular conditions. Such hybridizable polynucleotides will typically exhibit at least about 75% sequence identity at the nucleotide level to said genes or genome, preferably about 80% or 95% sequence identity or preferably more than 95% nucleotide sequence identity to said genes or genome. They are composed of either small sequences typically 15-30 bases long, or longer ones being between 30 and 100 or even longer between 100 and 800 bases long, depending on the specificity and sensitivity requirements for the assay.

"Micro-array" means a support on which multiple capture molecules are immobilized in order to be able to bind to the given specific target molecule. The micro-array is preferentially composed of capture molecules present at specifically localized areas on the surface or within the support or on the substrate covering the support. A specifically localized area is the area of the surface which contains bound capture molecules specific for a determined target molecule. The specific localized area is either known by the method of building the micro-array, or is defined during or after the detection. A spot is the area where specific target molecules are fixed on their capture molecules and seen by the detector. A spot is the area where specific target molecules are fixed on their capture molecules and seen by the detector. In one particular application of this invention, micro-arrays of capture molecules are also provided on different supports as long as the different supports contain specific capture molecules and may be distinguished from each other in order to be able to quantify the specific target molecules. This can be achieved by using a mixture of beads having particular features and being able to be recognized from each other in order to quantify the bound molecules. One bead or a population of beads is then considered as a spot having a capture molecule specific of one target molecule.

The "amplicon" of the invention means target nucleotide molecules being the result of PCR amplification of a nucleotide molecule present in a biological material.

The inventors have discovered that it is possible to drastically simplify the identification of one or several (micro)organisms among many other ones having homologous sequences by:
combining a single amplification using a common primer pair, and
an identification of the possible (micro)organism(s) by detecting and possibly recording upon an array the presence of a single signal resulting only from a binding between a capture sequence and its corresponding target sequence, and
correlating the presence of said detected target sequence to the identification of a genetic sequence specific of said (micro) organism(s).

The method and device according to the invention allow the easy identification/detection of a specific sequence among other homologous sequences and possibly its quantification (characterisation of the number of copies or presence of said organisms in a biological sample) of a target sequence, said target sequence having a nucleotide sequence specific of said (micro) organisms.

Such identification is obtained directly, or after washing of possible contaminants (unbound sequences), by detecting and possibly recording a single spot signal at one specific location, wherein said capture molecule was previously bound. The identification of a particular sequence is not a result of an analysis of a specific pattern upon the micro-array as proposed in the system of the state of the art. Therefore, said method and device do not necessarily need a detailed analysis of said pattern by an image processing and a software analysis.

This detection has been made possible by the discovery that target sequences can be discriminated from other homologous ones upon an array with high sensitivity by using bound capture molecules composed of at least two parts, one being a spacer portion bound by a single and advantageously predetermined (defined) link to the support (preferably a non porous support) and the other part being a specific nucleotide sequence (the capture portion) able to hybridise with the nucleotide target sequence if the capture molecule has particular feature disclosed in this invention.

The present invention discloses a particular feature of the capture molecules of a specific design, conducive to obtaining the high sensitivity and fast detection of amplicons present in a solution.

The inventors found that the detection of amplicons on immobilized capture molecules requires a specific design of the capture molecules in order to make the detection useful in term of sensitivity and speed and being applicable for detection of organisms using PCR amplification.

The present invention is related to a method for designing and/or preparing a polynucleotide capture molecule for detecting an amplicon having one strand serving as target to be detected and/or quantified after hybridization on said capture molecule.

The method comprises the steps of:
a) selecting a primer pair defining the amplicon;
b) selecting a specific sequence of 10 to 100 nucleotides within the amplicon, such that said specific sequence defines two non-complementary ends of the amplicon;
c) defining the capture molecule having a capture portion that is complementary to the specific sequence selected in step b), and a spacer portion comprising at least 20 nucleotides;
d) identifying among the two non-complementary ends of the amplicon a spacer end and a non-spacer end, respectively, such that the spacer end is non-complementary to the spacer portion of the capture molecule, and said spacer end exceeds said non-spacer end by at least 50 bases.

In a second embodiment the invention relates to a method for preparing the capture molecule.

In a third embodiment the invention relates to a capture molecule obtainable by the method of this invention.

In a fourth embodiment the invention relates to a method for detecting an amplicon using the capture molecule.

In a fifth embodiment the invention relates to a kit for detecting an amplicon, which kit comprises the capture molecule.

It will be appreciated that the selection of the primer pair is in many cases governed to a large extent by the expected reaction conditions and the need for consensus primers. The selection of the primers in turn defines the amplicon that will be produced.

In the next step a sequence is identified on the amplicon for selective hybridization to the capture molecule. It is desirable to select a region on the amplicon that is likely to be different from the corresponding region of homologous amplicons. For the purpose of the present invention it is essential that the selected sequence be located at a defined distance from the amplicon ends. The selected sequence defines two ends of the amplicon, one end being longer than the other. The longer end will become the spacer end; the shorter end will become the non-spacer end. The spacer end is longer than the non-spacer end by at least 50 bases.

The capture molecule comprises a capture portion and a spacer portion. The capture portion is complementary to the selected sequence of the amplicon in usual fashion, to ensure optimum hybridization of the amplicon to the capture molecule. The spacer portion is also a polynucleotide, but it is non-complementary to the spacer end of the amplicon (and of course non-complementary to the non-spacer end as well).

In a preferred embodiment, the capture molecule is immobilized on a solid support with its spacer portion being located at the side of the support and the sequence of the capture molecule specific of the amplicon (i.e., the capture portion) is located at the free end. In other words, the spacer portion is located between the solid support and the capture portion. Attachment to the solid support may be by any method known in the art.

It will be appreciated that the spacer portion of the capture molecule may extend from the 5' end of the capture portion, or from its 3' end. This is determined by the requirement that the spacer end of the amplicon be longer (by at least 50 bases) than its non-spacer end.

If the spacer portion of the capture molecule is at the 5' end of the capture portion, the attachment of the capture molecule to the solid surface is at the 5' end of the capture molecule or nearby. Conversely, if the spacer portion is at the 3' end of the capture portion, the capture molecule is attached to the solid support by its 3' end or nearby.

In another embodiment the distal end of the spacer portion of the capture molecule has a nucleotide containing a free amino group, to be used for reacting on an activated support preferably having aldehyde or epoxide functions or other chemical groups on which the amine can react in order to make a covalent link between the capture molecule and the support or on a material covering the support.

The method gives its best results for the detection of amplicons having a length of at least 200 nucleotides, preferably at least 300, more preferably more than 400 nucleotides. Amplicons of these lengths are therefore preferred.

The inventors found that the use of a long spacer portion gives a significant increase in the rate and the yield of the detection. Preferably, the capture portion of the capture molecule is separated from the surface of the solid support by a spacer portion of at least about 6.8 nm, equivalent to the distance of at least 20 base pair long nucleotides in double helix form.

In a preferred embodiment the spacer portion of the capture molecule is a polynucleotide chain composed of a nucleotide sequence of at least 20 nucleotides, preferably more than 40, more preferably more than 60 and most preferably more than 90 nucleotides.

In a particular embodiment the capture molecule has a spacer portion having at least 60% homology with the following sequence:
5'GAATTCAAAGTTGCTGAGAATAGTTCAATGGAAGGAAGCG 3' (SEQ ID NO: 1) (40 bases). More preferably the homology is at least 80%, and most preferably at least 90%.

In still another embodiment the capture molecule has a spacer portion having at least 60% homology with the following sequence:
5'AAGTTGAGTCCATTTGTGATGCTAGAAAAGTTGGAACTTTCTTGAACGTCTCCTATATGTCATACATGAATAGGTTGATTTTACTGTAC 3' (SEQ ID NO:2) (90 bases). More preferably the homology is at least 80%, and most preferably at least 90%.

In a preferred embodiment the capture molecule has a spacer portion having at least 60% homology with the following sequence:
5'ATAAAAAAGTGGGTCTTAGAAATAAATTTCGAAGTGAATAATTATTATTCACAACATTTCGATTTTTGCAACTACTTCAGTTCACTCCAAATTA 3' (SEQ ID NO. 3) (95 bases). More preferably the homology at least 80%, and most preferably at least 90%.

Another important aspect of this invention is the use of specific concentrations of capture molecules on the surface of the solid support. If this concentration is too low, the yield of the binding is low and may not be detectable. In immobilizing capture molecules onto the solid support, concentrations of capture molecules between about 600 and about 3000 nM in the spotting solutions are preferred. However, concentrations as low as about 100 nM still give positive results in favourable cases (when the yield of covalent fixation is high or when the target to be detected is single stranded and present in high concentrations). Such low spotting concentrations give a density of capture molecule as low as 20 fmoles per cm². On the other side, higher density was only limited in the assays by the concentrations of the capture solutions, but concentrations still higher than 3000 nM give good results. The surface density should not normally exceed 2000 fmoles per cm².

The use of these very high concentrations, the long spacer portion and the special design of the capture molecule provided in this invention are unexpected characteristic features of the invention. The theory of DNA hybridisation proposed that the rate of hybridisation between two DNA complementary sequences in solution is proportional to the square root of the DNA length, the smaller one being the limiting factor (Wetmur and Davidson, J. Mol. Biol., Vol. 3, p.584, 1968). In order to obtain the required specificity of detection, the specific sequences (capture portion) of the capture molecules had to be small compared to the target since longer sequences have more chances to cross-react with non specific sequences. Since they are small the rate of reaction with a complementary sequence is low. Moreover the capture molecules are on a support and the presence of a solid surface reduces even more the rate of reaction due to the diffusion limitation. Since the targets are obtained by PCR amplification and are double stranded, they re-associate in solution much faster than they hybridise on small sequences fixed on a solid support, where diffusion is low, thus reducing the rate of reaction even more. It was unexpected to observe with the present invention a so large yield of hybridisation of the amplicons on such short specific sequence.

The reason for such unexpected effect is not clear. One of the possible explanation is an unexpected effect of stabilization of the amplicon strand by the nucleotide sequence of the spacer portion in the following way. The DNA hybridization process occurs in two steps: nucleation and zippering. During the nucleation step, short sequence stretches of about 5 bases of the target strand interact along the capture molecule sequence until they find a perfect match. This step is the limiting step of the hybridization. The presence of the polynucleotide spacer portion may play a role of stabilizer during the nucleation. Even if the spacer portion is not complementary to the target, it will interact with some bases of the target which are positioned at proximity and would lead to some stabilization of the interaction. Once the nucleation is accomplished, the hybridization of the adjacent bases is very fast (zippering) and the propagation of the double helix stabilizes the hybrid.

The method according to the invention may be implemented by providing a kit comprising specific elements necessary to carry out the method.

Specifically, such a kit comprises a capture molecule designed by the method of the present invention. The kit may further comprise a solid support. The solid support is either pretreated to react with the spacer portion of the capture molecule, or the solid support may have the capture molecule immobilized on it. In addition the kit may contain the means for carrying out the hybridization of the amplicons to the capture molecules, and/or the primers and labeling means for carrying out the PCR and/or the washing solutions.

In a preferred embodiment the kit comprises at least an insoluble solid support upon which are immobilized single stranded capture molecules (preferably bound to the surface of the solid support by a direct covalent link or by the intermediate of a spacer portion) in specifically localized areas of said support in the form of a micro-array of at least 4 capture molecules per cm², preferably at least 10, 16, 20, 50, 100, 1000, 4000, 10 000 or more, different capture molecules per cm² of solid support surface.

The capture molecules have advantageously a length comprised between about 30 and about 600 bases, preferably between 30 and 300 bases, more preferably between 40 and 150 bases (including the spacer portion) and containing a capture portion of about 10 to about 100 bases, said capture portion being specific for the target (which means that said bases of said sequence are able to form a binding with their complementary bases upon the sequence of the target by complementary hybridisation). Preferably, said hybridisation is obtained under stringent conditions (under conditions well-known to the person skilled in the art).

In the method according to the invention, the portion(s) (or part(s)) of the capture molecule complementary to the target is comprised between 10 and 100 nucleotides, preferably between 15 and 40 nucleotides and more preferably between 20 and 30 nucleotides. These nucleotides are preferably assigned as a continuous sequence located at or near the extremity of the capture molecule. This sequence is considered as the specific sequence for the detection (capture portion).

In preferred embodiment, the capture portion is capable of discriminating a target sequence from at least another sequence having less than 85% homology with the target. In still another embodiment the capture portion of two capture molecules for the detection of two different amplicons differ by more than 10% and even better by more than 20%.

The present design of capture molecules allows the identification of a target sequence obtained from a biological (micro)organism or a portion thereof, especially a gene possibly present in a biological sample from at least 4 other homologous (micro)organisms or a portion thereof, said other (micro)organisms could be present in the same biological sample and have homologous nucleotide sequences with the target.

Said identification is obtained firstly by a genetic amplification of said nucleotide sequences (target and homologous sequences) by common primer pairs followed (after washing) by a discrimination between the possible different target amplified. Said discrimination is advantageously obtained by hybridization upon the surface of an array containing capture molecules at a given location, specific for a target specific for each (micro)organism to be possibly present in the biological sample and by the identification of said specific target through the identification and possibly the recording of a signal resulting from the specific binding of this target upon its corresponding capture sequence at the expected location (a single location signal being specific for a target).

According to the invention, the preferred method for genetic amplification is a PCR using two anti-parallel consensus primers which can recognise all said target homologous nucleotide sequences. The primers are selected such that the resulting amplicon comprises at least 200 bp, preferably at least 300 bp, more preferably at least 400 bp; preferably the amplicon does not exceed 2000 bp.

The method according to the invention further comprises the step of correlating the signal of detection (possibly recorded) to the presence of: specific (micro)organism(s), genetic characteristics of a sequence, polymorphism of a sequence, diagnostic predisposition or evolution (monitoring) of genetic diseases, including cancer of a patient (including the human) from which the biological sample has been obtained.

The (micro)organisms could be present in any biological material including genetic material obtained (virus, fungi, bacteria, plant or animal cell, including the human). The biological sample can be also any culture medium wherein microorganisms, xenobiotics or pollutants are present, as well as such extract obtained from a plant or an animal (including a human) organ, tissue, cell or biological fluid (blood, serum, urine, etc).

The method according to the invention is particularly suitable for the identification of a target, being preferably biological (micro)organisms or a part of it, possibly present in a biological sample where at least 4, 12, 15 or even more homologous sequences are present. Because of the high homology, said sequence can be amplified by common primer(s) so that the identification of the target is obtained specifically by the discrimination following its binding with the corresponding capture molecule, previously bound at a given location upon the micro-array. The sensitivity can be also greater increased if capture molecules are spotted to the solid support surface by a robot at high density according to an array. A preferred embodiment of the invention is to use an amount of capture molecules spotted on the array resulting in the binding of between about 0.01 to about 5 pmoles of sequence equivalent/cm² of solid support surface.

The kit according to the invention may also incorporate various media or devices for performing the method according to the invention. Said kit (or device) can also be included in an automatic apparatus such as a high throughput screening apparatus for the detection and/or the quantification of multiple nucleotide sequences present in a biological sample to be analysed. Said kit or apparatus can be adapted for performing all the steps or only several specific steps of the method according to the invention.

If the homology between the sequences to be detected is low (between 30 and 60%), parts of the sequence that are specific in each sequence can be used for the design of capture portion of capture molecules, binding each of the different target sequences. However, it is more difficult to find part of the sequence sufficiently conserved as to design "consensus" sequences that will amplify or copy all desired sequences. If one pair of consensus primers is not enough to amplify all the homologous sequences, then a mixture of two or more primers pairs is added in order to obtain the desired amplifications. In a consensus amplification, the minimum number of homologous sequences amplified by the same consensus primer is two, but there is no upper limit to this number.

If the sequences show high degree of homology, higher than 60% and even higher than 90%, the finding of a common sequence for consensus primer is easily obtained, but the selection of capture portion becomes more difficult.

In a preferred embodiment, the primer pair for a consensus amplification is capable of amplifying at least two target homologous sequences having more than 60 and even more than 90% homology, and the capture molecules are able to detect in a specific way the two homologous targets.

In another preferred embodiment of the invention, the capture molecules are chemically synthesised oligonucleotides sequences (easily performed on programmed automatic synthesiser). Such sequences can bear a functionalised group for covalent attachment upon the support, at high concentrations and are usually shorter than 200 bases.

Longer capture molecules are preferably synthesised by PCR amplification (of a sequence incorporated into a plasmid containing the specific part of the capture molecule (capture portion) and the non specific part (spacer portion)).

The method according to the invention is suitable for the detection and/or the quantification of a target which is made of DNA or RNA, including sequences which are partially or totally homologous upon their total length.

The method according to the invention can be performed even when a target present between a homology (or sequence identity) greater than 30%, greater than 60% and even greater than 80% and other molecules.

In the method according to the invention, the capture molecules are advantageously covalently bound (or fixed) upon the insoluble solid support, preferably by one of their extremities as described hereafter.

The method according to the invention gives significant results which allows identification (detection and quantification) with amplicons in solutions at concentration of lower than about 10 nM, of lower than about 1 nM, preferably of lower than about 0.1 nM and more preferably of lower than about 0.01 nM (=1 fmole/100 µl).

The amount of a target that "binds" on the spots is very small compared to the amount of capture molecules present. So there is a large excess of capture molecules, and there was no reason to obtain the binding if even more capture molecules.

One may perform the detection on the full length sequence after amplification or copy and when labeling is performed by incorporation of labeled nucleotides, more markers are present on the hybridised target making the assay sensitive.

Detection of genes is also a preferred application of this invention. The detection of homologous genes is obtained by first reverse transcription of the mRNA and then amplification by consensus primers as described in this invention.

Increase rate and yield of hybridization given by the present invention is also particularly useful for the detection of single stranded DNA or RNA present in a solution; Advantageously the invention is applied for the detection of cDNA transcripts from mRNA of for the detection of RNA produced by the amplification performed using a T7 polymerase assay.

In the microbiological field, one may use consensus primer(s) specific for each family, or genus, of microorganisms and then identify some or all the species of these various families in an array by using capture molecules of the invention. Detection of other sequences can be advantageously performed on the same array (i.e. by allowing an hybridisation with a standard nucleotide sequence used for the quantification, with consensus capture molecules for the same or different micro-organisms strains, with a sequence allowing a detection of a possible antibiotic resistance gene by micro-organisms or for positive or negative control of hybridisation). A long capture molecule may also be present on the array as consensus capture molecule for hybridisation with all sequences of the microorganisms from the same family or genus, thus giving the information on the presence or not of a microorganism of such family, genus in the biological sample.

The same array can also bear capture molecules specific for a bacterial group (Gram positive or Gram negative strains or even all the bacteria).

Another application is the detection of homologous genes from a consensus protein of the same species, such as various cytochromes P450 by specific capture molecules with or without the presence of a consensus capture molecule for all the cytochromes possibly present in a biological sample. Such detection is performed at the gene level by reverse transcription into cDNA.

The solid support according to the invention can be or can be made with materials selected from the group consisting of gel layers, glasses, electronic devices, silicon or plastic support, polymers, compact discs, metallic supports or a mixture thereof (see EP 0 535 242, U.S. Pat. No. 5,736,257, WO99/35499 U.S. Pat. No. 5,552,270, etc). Advantageously, said solid support is a single glass slide which may comprise additional means (barcodes, markers, etc.) or media for improving the method according to the invention. Preferably, the solid support is in the form of beads.

The amplification step used in the method according to the invention is advantageously obtained by well known amplification protocols, preferably selected from the group consisting of PCR, RT-PCR, LCR, CPT, NASBA, ICR or Avalanche DNA techniques.

In a particular embodiment the capture molecules detect the amplicons during the PCR amplification. In another particular embodiment the capture molecules allow to follow the production of amplicons during the PCR cycles.

In an embodiment, the capture molecules are used in real time PCR detection of amplicon. The amplicon is detected in real time as it is produced during a series of PCR cycles

In still another embodiment, the capture molecules are used in real time PCR detection on an array. Detection of the amplicons during the PCR amplification is one of the main features of the present invention. The design of the capture molecules allows the binding of the amplicons as they are formed in the different amplification cycles. The binding does not require any particular treatment of the amplicons, except for the dissociation of the two strands, which is in any way performed during the PCR cycles, and the right conditions (temperature and salt concentration) to obtain a specific and fast hybridization. These conditions may be readily determined by a person skilled in the art. This embodiment was possible due to the possibility of the present invention to avoid cutting the amplicons for their detection on a capture molecule.

Advantageously, the target to be identified is labeled prior to its hybridisation with the single stranded capture molecules. Said labeling (with known techniques to the person skilled in the art) is preferably also obtained upon the amplified sequence prior to the denaturation (if the method includes an amplification step).

According to a further aspect of the present invention, the method according to the invention is advantageously used for the identification of different Staphylococcus species or variant, preferably the S. aureus, the S. epidermidis, the S. saprophyticus, the S. hominis or the S. haemolyticus for homologous organs present together or separately in the biological sample, said identification being obtained by detecting the genetic variants of the FemA gene in said different species, preferably by using a common locations in the FemA genetic sequence.

Preferably, the primer(s) and the specific portions of said FemA sequence used for obtaining amplified products are the ones described hereafter in examples 1 and 2. These primers have been selected as consensus primers for the amplification of the FemA genes of all of the 15 Staphylococcus tested and they probably will amplify the FemA from all other possible Staphylococcus species (example 3).

The detection of the 12 MAGE-A according to the invention is presented in example 4. The array allows reading of the MAGE number by observation of the lines positive for signal bearing the specific capture molecules.

Another aspect of the present invention is related to any part of biochips or micro-array comprising the capture molecules of the present invention. Yet another aspect is a general screening method for the identification of a target sequence specific of microorganisms of family type discriminated from homologous sequences upon any type of micro-arrays or biochips by any method.

After hybridisation on the array, the target sequences can be detected by current techniques. Without labeling, preferred methods are the identification of the target by mass spectrometry now adapted to the arrays (U.S. Pat. No. 5,821,060) or by intercalating agents followed by fluorescent detection (WO97/27329 or Fodor et al., Nature, Vol. 364, p. 555, 1993).

The labeling-based detection methods are numerous. A review of the different labeling molecules is given in WO 97/27317. They are obtained using either a labeled primer or by incorporation of labeled nucleotides during the copy or amplification step. Labeling can also be obtained by ligating a detectable moiety onto the RNA or DNA to be tested (a labeled oligonucleotide, which is ligated, at the end of the sequence by a ligase). Fragments of RNA or DNA can also incorporate labeled nucleotides at their 5'OH or 3'OH ends using a kinase, a transferase or a similar enzyme.

The most frequently used labels are fluorochromes, such as Cy3, Cy5 and Cy7, suitable for analysing an array by using commercially available array scanners (General Scanning, Genetic Microsystem). Radioactive labeling, cold labeling or indirect labeling with small molecules recognised thereafter by specific ligands (streptavidin or antibodies) are common methods. The resulting signal of target fixation on the array is either fluorescent or colorimetric, obtained by diffusion, electroluminescent, bio- or chemiluminescent, magnetic, electric like impedometric or voltametric (U.S. Pat. No. 5,312,527). A preferred method is based upon the use of the gold labeling of the bound target in order to obtain a precipitate or silver staining which is then easily detected and quantified by a scanner.

Quantification has to take into account not only the hybridisation yield and detection scale on the array (which is identical for target and reference sequences) but also the extraction, the amplification (or copying) and the labeling steps.

The method according to the invention may also comprise means for obtaining a quantification of target nucleotide sequences by using a standard nucleotide sequence (external or internal standard) added at known concentration. A capture molecule may also be present on the array so as to fix the standard in the same conditions as said target (possibly after amplification or copying); the method comprising the step of quantification of a signal resulting from the formation of a double stranded nucleotide sequence formed by complementary base pairing between the capture molecules and the standard and the step of a correlation analysis of signal resulting from the formation of said double stranded nucleotide sequence with the signal resulting from the double stranded nucleotide sequence formed by complementary base pairing between capture molecule(s) and the target in order to quantify the presence of the original nucleotide sequence to be detected and/or quantified in the biological sample.

Advantageously the standard is added in the initial biological sample or after the extraction step and is amplified or copied with the same primers and/or has a length and a GC content identical or differing from no more than 20% to the target. More preferably, the standard can be designed as a competitive internal standard having the characteristics of the internal standard found in the document WO98/11253. Said internal standard has a part of its sequence common to the target and a specific part which is different. It also has at or near its two ends sequences that are complementary of the two primers used for amplification or copy of the target and similar GC content (WO98/11253). In a preferred embodiment of this invention, the common part of the standard and the target, means a nucleotide sequence which is homologous to all targets amplified by the same primers (i.e. which belong to the same family or organisms to be quantified).

Preferably, the hybridisation yield of the standard through this specific sequence is identical or differ no more than 20% from the hybridisation yield of the target sequence and quantification is obtained as described in WO 98/11253.

Said standard nucleotide sequence, external and/or internal standard, is also advantageously included in the kit according to the invention, possibly with all the media and means necessary for performing the different steps according to the invention (hybridisation and culture media, polymerase and other enzymes, standard sequence(s), labeling molecule(s), etc.).

Advantageously, the biochips also contain spots with various concentrations (e.g. 4) of labeled capture molecules. These labeled capture molecules are spotted from solutions of known concentrations. Their signals allow the conversion of the results of hybridisation into absolute amounts. They also allow assess the reproducibility of the detection.

The solid support (biochip) can be inserted in a support connected to another chamber and automatic machine through the control of liquid solution based upon the use of microfluidic technology. By being inserted into such a microlaboratory system, it can be incubated, heated, washed and labeled by automates, even for preceding steps (like extraction of DNA, amplification by PCR) or the subsequent step (labeling and detection). All these steps can be performed upon the same solid support.

The present invention will be described in details in the following non-limiting examples in reference to the enclosed figures.

### Examples

### Example 1. Effect of the position of the capture molecule within the amplicon strand on its hybridization efficiency on a micro-array

In this example, we tested the effect of the position of the capture molecule compared to the amplicons sequence on the hybridization efficiency as described in this invention. The *gyrase* gene was used as genetic target. We generated a gyrase amplicon of 915 bp targeted by the capture portion of the capture molecule (27 nucleotides) located in different areas of the amplicon (figure 1). These capture molecules also comprised a spacer portion of 90 bp. They were immobilized on a solid support according to an array. Three of these capture molecules (1a, 2a, 3a) were designed to be complementary to the sense strand while three other capture molecules (1s, 2s, 3s) targeted the same region but hybridized to antisense strand (figure 1).

### Bacterial strains

The reference strain of *S. aureus* ATCC 25923 was obtained from the Deutsche Sammlung von Mikroorganismen und Zellkulturen GmbH (DSMZ, Germany).

### DNA purification

Bacterial strains were grown from single colonies in LB medium (10 g of peptone, 5 g of yeast extract and 5 g of NaCl/1) overnight at 37°C in aerobic conditions. An aliquot (0.1 ml) of an overnight culture was pelleted by centrifugation (5000 g, 5 min). The bacterial pellet was resuspended in 300 µl of lysis buffer (50 mM Tris HCl pH 8.0, 100 µM EDTA, 150 mM NaCl, 1% SDS) containing 100 µg of lysostaphin (Sigma, Mo, USA) and 100 µg of RNase and incubated at 37°C for 30 min. Lysis was achieved by incubation at 37°C for 30 min in the presence of 200 µg of proteinase K (Boehringer, Mannheim, Germany) and boiling for 5 min. Lysate was centrifuged at 4000 g for 5 min and DNA was extracted from 200 µl of supernatant by adsorption on Nucleospin C+T columns (Macherey-Nagel, Düren, Germany), according to the manufacturer's instruction. DNA was eluted in 200 µl of sterile water and stored at -20°C.

### PCR amplification

Part of the *gyrase A* (GYR) gene was amplified by PCR using the following consensus primers:

gyr1 5' GCNGCDGCRATGCGTTATAC 3'

gyr3 5' GAACCHYKACCTGTTTCATA 3'

N = A,G,T,C

D = G,A,T

R = A,G

H = A,T,C

Y = C,T

K = G,T

The primers were consensus primers designed for the amplification of multiple gyrases from different bacteria.

The sequences of the capture portions of the capture molecules for the detection of the gyrase amplicons were the following:

| **Capture molecule name** | **Capture portions in the *gyrase A* gene 5' → 3'** |
|---|---|
| 1a | TTCTTGTCACGAACGAGCT |
| 2a | GAAAGTTTGAAGCGTTGTTG |
| 3a | TCCTCTAAGTCTTCAAATCC |
| 1s | AGCTCGTTCGTGACAAGAA |
| 2s | CAACAACGCTTCAAACTTTC |
| 3s | GGATTTGAAGACTTAGAGGA |

### Micro-array fabrication

The capture portions were extended from their 5' end by spacer portion of 90 bp which had the following sequence:

The last nucleotide of the spacer portion was aminated at its 5'end. The array also contained hybridization positive controls, which were CYP2B2 amplicons hybridized on their corresponding capture molecules, and hybridization negative controls which were capture molecules for a NFKB sequence on which the CYP2B2 could not bind. There was also on the array detection control capture molecules corresponding to biotinylated CMV DNA.

### Capture molecule immobilisation

The protocol described by Schena et al. (Proc. Natl. Acad. Sci. USA, Vol. 93, p.10614, 1996) was followed for grafting of aminated DNA to aldehyde derivatized glass. The capture molecules aminated at their 5'end were spotted from solutions at concentrations of 3000 nM. The capture molecules were printed onto microscopic glass slides with a home made robotic device (250 µm pins from Genetix (UK)). The microscope slides were glass slides bearing aldehyde groups as provided by the application WO 02/18288. The spots were 400 µm in diameter and the volume dispensed is about 0.5 nl. Slides were dried at room temperature and stored at 4 °C until use.

### PCR amplification

The PCR was performed on DNA extracted from the reference strain in a final volume of 50 µl containing: 4 mM MgCl2, 10 mM Tris pH 8.4, 50 mM KCl, 0.5 µM of each primer, 50 µM of each dNTP, 10 µM of biotin-16-dATP and biotin-16-dCTP), 1.5 U of Taq DNA polymerase Ultratools, 10 µl of extracted DNA. Samples were first denatured at 94 °C for 3 min. Then 35 cycles of amplification were performed consisting of 30 sec at 94 °C, 30 sec at 55°C and 1 min at 72 °C and a final extension step of 10 min at 72 °C. Water controls were used as negative controls of the amplification. The size of target amplicon was 915 bp.

### Hybridization

To 35 µl of hybridisation solution (Eppendorf, Hamburg, Germany) were added 20 µl of amplicons and the solution was loaded on the array framed by a hybridisation chamber. For positive controls we added 50 nM biotinylated CYP2B2 amplicons of 375 bp to the solution; their corresponding capture molecules were spotted on the array. The chamber was closed with a cover and slides were denatured at 95 °C for 5 min. The hybridisation was carried out at 65°C for 2 h. Samples were washed 4 times with a washing buffer.

### Fluorescence detection

The glass samples were incubated 45 min at room temperature with the Cy3-conjugated IgG Anti biotin (Jackson Immuno Research Laboratories, Inc #200-162-096) diluted 1/1000 X Conjugate-Cy3 in the blocking buffer and protected from light. After washing the slides were dried before being stored at room temperature. The detection was performed in a laser confocal scanner "ScanArray" (Packard, USA). Each slide was then quantified by specific quantification software.

After washing and analysis, it was observed that the fluorescence signal for each capture molecule was not identical. Plotting the fluorescence intensities of hybridization against the regions of the amplicons recognized by the capture molecules revealed a correlation between the fluorescent intensity and the length of the free spacer end of the amplicons (Figure 2).

The strongest hybridization signal was always associated with the capture molecule targeting an amplicon strand with a very long free end at the side of the spacer portion (capture molecules 1a and 3s). In case of capture molecules 3a and 1s, the free end of the target is very short and there is nearly no contact with the spacer portion. In case of capture molecules 2a and 2s, the free end of the target is intermediate and the stabilizer effect of the spacer portion is variable. The next table summarizes the distance of the capture portion of the capture molecule from the spacer end (3'end) and from the non-spacer end (5' end) of the amplicon strand sense or antisense. The fluorescence signal intensity is also indicated.

| **Capture molecule name** | **Target strand** | **Distance from spacer end of target (nucleotide)** | **Distance from non-spacer end of target (nucleotide)** | **Fluorescence Signal Intensity** |
|---|---|---|---|---|
| 1a | sense | 764 | 124 | 53786 |
| 2a | sense | 365 | 523 | 532 |
| 3a | sense | 116 | 772 | 214 |
| 1s | antisense | 124 | 764 | 1834 |
| 2s | antisense | 523 | 365 | 42201 |
| 3s | antisense | 772 | 116 | 56975 |

### Example 2. Effect of the Spacer portion Length on the Sensitivity of Detection of Homologous FemA Sequences on Array

In this example, we tested the influence of the spacer portion length on the hybridization efficiency in the design of the capture molecules according to the invention.

The *FemA* gene was used as genetic target. We generated a Staphylococcus epidermidis amplicon of 585 bp targeted by complementary capture portion of the capture molecules of 27 bases located at a distance of 415 bp from the free 3' end of the sense amplicon strand (spacer end). The capture portion of 27 bases comprised a spacer portion at its 5' end of different lengths: 20,40, 85 and 95 bases.

### PCR amplification

The targets were fragments of the *FemA* gene sequence corresponding to Staphylococci epidermidis which was amplified by PCR using the following consensus primers:
APcons3-1: 5' TAAYAAARTCACCAACATAYTC 3'
APcons3-2: 5' TYMGNTCATTTATGGAAGATAC 3'
Y = C,T
R = A,G
M = A,C
N = A,G,T,C

This PCR was performed in a final volume of 100 µl containing: 3 mM MgCl₂, 1 mM Tris pH 8, 1 µM of each primer, 200 µM of dATP, dCTP and dGTP, 150 µM of dTTP, 50 µM of biotin-16-dUTP, 2.5 U of Taq DNA polymerase (Boehringer Mannheim, Germany), 1 U of Uracil-DNA-glycosylase heat labile (Boehringer Mannheim, Germany), 1 ng of plasmid containing the *FemA* gene. Samples were first denatured at 94 °C for 5 min. Then 40 cycles of amplification were performed consisting of 1 min at 94°C, 1 min at 50°C and 1 min at 72 °C and a final extension step of 10 min at 72 °C. Water controls were used as negative controls of the amplification. The target amplicons were 585 bp long while the capture molecules were 47, 67, 112 or 122 bases single stranded DNA with a capture portion of 27 bases and varying lengths of spacer portion (20,40, 85 or 95 bases).

### Micro-array fabrication

The capture molecule sequences used were the following:
Name Sequence (5' -> 3') Capture molecule
A Tepi03 GAATTCAAAGTTGCTGAGAAATTAAGCACATTTCTTTCATTATTTAG The spacer portion sequences are underlined.

The biochips also contained positive controls, which were CMV amplicons hybridised on their corresponding capture molecule, and negative controls, which were capture molecules for a HIV-I sequence on which the CMV could not bind. The capture molecules were immobilized as described in example 1.

### Hybridisation

To 65 µl of hybridisation solution (Eppendorf, Hamburg, Germany) were added 5 µl of amplicons and the solution was loaded on the array framed by a hybridisation chamber. For positive controls we added 2 nM biotinylated CMV amplicons of 437 bp to the solution; their corresponding capture molecules were spotted on the array. The chamber was closed with a cover, and slides were denatured at 95°C for 5 min. The hybridisation was carried out at 60°C for 2 h. Samples were washed 4 times with a washing buffer.

*Fluorescence Detection*

The glass samples were incubated 45 min at room temperature with 800 µl of Cyanin 3 or Cyanin 5 labeled streptavidin. After washing the slides were dried before being stored at room temperature. The detection was performed in the array-scanner GSM 418 (Genetic Microsystem, Woburn, Mass., USA). Each slide was then quantified by a specific quantification software.

As shown in figure 3, the rate of hybridization was increased by a factor of 5 for a spacer portion of 95 nucleotides, as compared to a spacer portion of 20 nucleotides when keeping constant the design of the capture portion relative to the amplicon.

### Example 3. Design of capture molecule for detection of 15 Homologous FemA Sequences on Array

We generated Staphylococcus amplicons of 585 bp targeted by complementary capture portion of the capture molecule of 27 bases located at a distance of 415 bp from the free 3' end of the sense amplicon strand. The configuration was similar to the capture molecule 1a of Figure 1.
The amplification, hybridization and detection were performed as described in example 2.

The capture portions of the capture molecules were the following:

| **Species specific capture molecules** | **Capture portion sequences in the *fem A* gene 5' -> 3'** |
|---|---|
| S. aureus | ATTTAAAATATCACGCTCTTCGTTTAG |
| S. epidermidis | ATTAAGGACATTTCTTTCATTATTTAG |
| S. haemolyticus | ATTTAAAGTTTCACGTTCATTTTGTAA |
| S. hominis | ATTTAATGTCTGACGTTCTGCATGAAG |
| S. saprophyticus | ACTTAATACTTCGCGTTCAGCCTTTAA |
| S. capitis | ATTAACAACATCTCTTTCATTATTAAG |
| S. cohnii | ACTTAACACTTCACGCTCTGACTTGAG |
| S. gallinarum | ACTTAAAACTTCACGTTCAGCAGTAAG |
| S. intermedius | GTGGAAATCTTGCTCTTCAGATTTCAG |
| S. lugdunensis | TTCTAAAGTTTGTCGTTCATTCGTTAG |
| S. schleiferi | TTTAAAGTCTTGCGCTTCAGTGTTGAG |
| S. sciuri | GTTGTATTGTTCATGTTCTTTTTCTAA |
| S. simulans | TTCTAAATTCTTTTGTTCAGCGTTCAA |
| S. warneri | AGTTAAGGTTTCTTTTTCATTATTGAG |
| S. xylosus | GCTTAACACCTCACGTTGAGCTTGCAA |

The capture molecules contained a spacer portion of 40 bases fixed on the support by its 5' end (5' Amine-GAATTCAAAGTTGCTGAGAATAGTTCAATGGAAGGAAGCG-3') (SEQ ID NO: 1) followed by the capture portion specific for the various *FemA* genes from the different Staphylococcus.

The next table summarizes the distance of the capture portion of the capture molecule from the spacer end (3'end) and from the non-spacer end (5'end) of the amplicon strand. The configuration of the capture molecule in relation with figure 1 is also indicated.

| **Species specific capture molecules** | **Target strand** | **Distance from spacer end of target (nucleotide)** | **Distance from non-spacer end of target (nucleotide)** | **Capture molecule configuration of figure 1** |
|---|---|---|---|---|
| S.aureus | sense | 415 | 143 | 1a |
| S. epidermidis | sense | 415 | 143 | 1a |
| S. haemolyticus | sense | 415 | 143 | 1a |
| S. hominis | sense | 415 | 143 | 1a |
| S. saprophyticus | sense | 415 | 143 | 1a |
| S. capitis | sense | 415 | 143 | 1 a |
| S. cohnii | sense | 415 | 143 | 1a |
| S. gallinarum | sense | 415 | 143 | 1a |
| S. intermedius | sense | 415 | 143 | 1a |
| S. lugdunensis | sense | 415 | 143 | 1a |
| S. schleiferi | sense | 415 | 143 | 1a |
| S. sciuri | sense | 415 | 143 | 1a |
| S. simulans | sense | 415 | 143 | 1a |
| S. warneri | sense | 415 | 143 | 1a |
| S. xylosus | sense | 415 | 143 | 1a |

The detection was made in colorimetry.

### Colorimetric Detection

The glass samples were incubated 45 min at room temperature with 800 µl of streptavidin labelled with colloidal gold 1000 times diluted in blocking buffer (Maleic buffer 100 mM pH 7.5, NaCl 150 mM, Gloria milk powder 0.1%). After 5 washes with washing buffer, the presence of gold served for catalysis of silver reduction using a staining revelation solution (Eppendorf, Hamburg, Germany). The slides were incubated 3 times 10 min with 800 µl of revelation mixture, then rinsed with water, dried and analysed using a microarray reader. Each slide was then quantified by a specific quantification software.

The results showed unambiguous identification of the 1 5 staphylococcus sequences.

### Example 4. Design of capture molecules for detection of homologous MAGE-A sequences on micro-array

### cDNA clones

cDNA clones of MAGE-A1, MAGE-A2, MAGE-A3, MAGE-A4, MAGE-A5, A8, A9, A10, A11, MAGE-A6 and A12 were from the Brussels branch of the Ludwig Institute.

### PCR amplification

Recombinant plasmids containing cDNA of MAGE-A1, A2, A3, A4, A5, A6, A8, A9, A10, A11 or A12 were subjected to PCR amplification with the following consensus primers.

### Sense primer

DPSCONS2 5' GGGCTCCAGCAGCCAAGAAGAGGA 3' Tm=78°C, located at nucleotide position 234-321 starting from the ATG codon of each *MAGE-A* gene.
Other primers were added as sense primer in order to increase the efficiency of the PCR for some MAGEs.
DPSMAGE1 5' GGGTTCCAGCAGCCGTGAAGAGGA 3' Tm = 78°C
DPSMAGE8 5' GGGTTCCAGCAGCAATGAAGAGGA 3' Tm = 74°C
DPSMAGE12 5' GGGCTCCAGCAACGAAGAACAGGA 3' Tm = 76°C

### Antisense primer

DPASCONB4 5' CGGTACTCCAGGTAGTTTTCCTGC 3' Tm=74°C, located at nucleotide position 734-838 starting from the ATG codon of each MAGE-A gene.
The size of the amplified products was around 530 bp depending on the MAGE sequences.

Amplification was performed in a 25 µL reaction volume containing 2.5 µL of cDNA, 1X PCR buffer (75 mmol/L Tris pH 9, 50 mmol/L KCl, 20 mmol/L (NH₄)₂SO₄, 2.5 mmol/L MgCl₂), 200 µmol/L of each dATP, dCTP, and dGTP, 150 µmol/L of dTTP, 50 µmol/L of Biotin-16-dUTP (Roche), 1 µmol/L of anti-sense consensus primer, 0.25 µmol/L of each sense primer including the consensus sense primer DPSCONS2 (Eurogentec, Seraing, Belgium), 0.625 U of DNA polymerase (Biotools, Madrid, Spain), and 0.2 U of Uracil-DNA Glysosylase (Roche) for preventing carry-over contamination. Cycling was performed in a PTC-200 thermocycler (Biozym, Landgraaf, The Netherlands). PCR reactions were heated to 95°C for 5 min, then amplification was carried out for 30 cycles (30 s at 94°C, 30 s at 55°C, 30 s at 72°C) and a final extension was performed at 72°C for 10 min.

### Micro-array fabrication

The following capture portions of 27 nucleotides have been chosen for the specific capture of the MAGE sequences.

| **Capture molecule name** | **Capture portion Sequence (5'-> 3')** | **Length (bases)** | **Tm (°C)^{a}** | **Location^{b}** |
|---|---|---|---|---|
| DTAS01 (MAGE-A1) | ACAAGGACTCCAGGATACAAGAGGTGC | 27 | 78 | 266-292 |
| DTAS02 (MAGE-A2) | ACTCGGACTCCAGGTCGGGAAACATTC | 27 | 79 | 287-313 |
| DTS0306(MAGE-A3) | AAGACAGTATCTTGGGGGATCCCAAGA | 27 | 76 | 704-730 |
| DTAS04 (MAGE-A4) | TCGGAACAAGGACTCTGCGTCAGGCGA | 27 | 81 | 321-395 |
| DTAS05 (MAGE-A5) | GCTCGGAACACAGACTCTGGGTCAGGG | 27 | 82 | 320-394 |
| DTS06 (MAGE-A6) | CAAGACAGGCTTCCTGATAATCATCCT | 27 | 75 | 591-617 |
| DTAS07 (MAGE-A7) | AGGACGCCAGGTGAGCGGGGTGTGTCT | 27 | 84 | 291-317 |
| DTAS08 (MAGE-A8) | GGGACTCCAGGTGAGCTGGGTCCGGGG | 27 | 87 | 293-319 |
| DTAS09 (MAGE-A9) | TGAACTCCAGCTGAGCTGGGTCGACCG | 27 | 82 | 281-307 |
| DTAS10 (MAGE-A10) | TGGGTAAAGACTCACTGTCTGGCAGGA | 27 | 78 | 365-391 |
| DTAS11 (MAGE-A 11) | GAAAAGGACTCAGGGTCTATCAGGTCA | 27 | 76 | 297-323 |
| DTAS12 (MAGE-A12) | GTGCTACTTGGAAGCTCGTCTCCAGGT | 27 | 79 | 299-325 |
| ^{a}Calculated by Oligo-4 software (National Biosciences, Inc.) using the %GC method. | | | | |
| ^{b}Nucleotide numbering is relative to the ATG codon of each *MAGE-A* gene. | | | | |

The capture molecules contained a spacer portion of 40 bases as provided in example 3.

### Hybridisation

Fifteen µL of the completed PCR reaction were mixed with 55 µL of hybridization solution (AAT) containing 5 nmol/L of biotinylated DNA control and the mixture was loaded on the array framed by an hybridization chamber (MJ Research Inc., Watertown, MA, USA). The chamber was closed with a coverslip. Slides were incubated at 65°C for 2 hr and then washed 4 times for 2 min each with washing buffer (AAT).

Detection was performed in fluorescence as described in example 2.

The next table summarizes the distance of the capture portion of the capture molecule from the spacer end (3'end) and from the non-spacer end (5'end) of the amplicon strand. The configuration of the capture molecule in relation with figure 1 is also indicated.

| **Capture molecule name** | **Target strand** | **Distance from spacer end of target (nucleotide)** | **Distance from non-spacer end of target (nucleotide)** | **Capture molecule configuration of figure 1** |
|---|---|---|---|---|
| DTAS01 (MAGE-A1) | sense | 471 | 32 | 1a |
| DTAS02 (MAGE-A2) | sense | 471 | 32 | 1a |
| DTS0306 (MAGE-A3) | antisense | 449 | 54 | 3s |
| DTAS04 (MAGE-A4) | sense | 440 | 63 | 1a |
| DTAS05 (MAGE-A5) | sense | 441 | 62 | 1a |
| DTS06 (MAGE-A6) | antsense | 336 | 167 | 3s |
| DTAS07 (MAGE-A7) | sense | 465 | 38 | 1a |
| DTAS08(MAGE-A8) | sense | 465 | 38 | 1a |
| DTAS09 (MAGE-A9) | sense | 465 | 38 | 1a |
| DTAS10 (MAGE-A10) | sense | 459 | 44 | 1a |
| DTAS11 (MAGE-A11) | sense | 461 | 42 | 1a |
| DTAS12 (MAGE-A12) | sense | 459 | 44 | 1a |

Hybridization was specific, except for the *MAGE*-*A6* amplicons which slightly cross-hybridized on the *MAGE*-*A3* capture portion. The reason for this cross-hybridization was due to the 96% identity shared by these sequences.

Thus, the invention has been described by reference to certain embodiments discussed above. It will be recognized that these embodiments are susceptible to various modifications and alternative forms well known to those of skill in the art.

Many modifications in addition to those described above may be made to the structures and techniques described herein without departing from the spirit and scope of the invention. Accordingly, although specific embodiments have been described, these are examples only and are not limiting upon the scope of the invention.

### Annex to the application documents - subsequently filed sequences listing

## Claims

1. A method for designing a polynucleotide capture molecule for detecting an amplicon having one strand serving as target to be detected and/or quantified after hybridization on said capture molecule, said method comprising the steps of:
a) selecting a primer pair defining the amplicon;
b) selecting a specific sequence of 10 to 100 nucleotides within the amplicon, such that said specific sequence defines two non-complementary ends of the amplicon;
c) defining the capture molecule having a capture portion that is complementary to the specific sequence selected in step b), and a spacer portion comprising at least 20 nucleotides;
d) identifying among the two non-complementary ends of the amplicon a spacer end and a non-spacer end, respectively, such that the spacer end is non-complementary to the spacer portion of the capture molecule, and said spacer end exceeds said non-spacer end by at least 50 bases.

2. A method for preparing a polynucleotide capture molecule for detecting an amplicon having one strand serving as target to be detected and/or quantified after hybridization on said capture molecule, said method comprising the steps of:
a) selecting a primer pair defining the amplicon;
b) selecting a specific sequence of 10 to 100 nucleotides within the amplicon, such that said specific sequence defines two non-complementary ends of the amplicon;
c) defining the capture molecule having a capture portion that is complementary to the specific sequence selected in step b), and a spacer portion comprising at least 20 nucleotides;
d) identifying among the two non-complementary ends of the amplicon a spacer end and a non-spacer end, respectively, such that the spacer end is non-complementary to the spacer portion of the capture molecule, and said spacer end exceeds said non-spacer end by at least 50 bases.

3. A capture molecule obtainable by the method of claim 2.

4. A method for detecting an amplicon comprising the step of hybridizing the amplicon to the capture molecule of claim 3.

5. The method of claim 4 wherein the capture molecule is immobilized on a solid support such that the spacer portion is located between the solid support and the capture portion.

6. The method of claim 5 wherein the capture molecule is immobilized by its 5' end.

7. The method of claim 5 wherein the capture molecule is immobilized by its 3' end.

8. The method of any one of claims 5 - 7 wherein the distal end of the spacer portion of the capture molecule has a nucleotide containing a free amino group.

9. The method of any one of claims 4-8 wherein the amplicon has a length of at least 200 bp, preferably at least 300 bp, more preferably at least 400 bp.

10. The method of any one of claims 4-9 wherein the amplicon has a length not exceeding 2000 bp.

11. The method of any one of claims 4-10 wherein the spacer portion is a polynucleotide chain having a length of at least 40 nucleotides, preferably at least 90 nucleotides.

12. The method of any one of claims 4 - 11 wherein the capture molecule comprises a spacer having at least 60% homology, preferably at least 80%, more preferably at least 90%, with the following sequence:

13. The method of any one of claims 4-12 wherein the capture molecule comprises a spacer having at least 60% homology, preferably at least 80%, more preferably at least 90%, with the following sequence:

14. The method of any one of claims 4-13 wherein the capture portion contains from 10 to 100 nucleotides, preferably from 15 to 40 nucleotides, more preferably from 20 to 30 nucleotides.

15. The method of any one of claims 5-14 wherein the density of capture molecules on the support is from 20 to 2000 fmoles/cm².

16. The method of any one of claims 5 - 15 wherein capture molecules are immobilized in specifically localized areas of a solid support in the form of a micro-array of at least 4 capture molecules per cm², preferably at least 20 capture molecules per cm², more preferably at least 100 capture molecules per cm².

17. The method of any one of claims 5 - 16 wherein the solid support is in the form of beads.

18. The method of any one of claims 4 - 17, wherein at least two amplicons are detected with at least two capture molecules, and wherein the capture portions of said at least two capture molecules differ by at least 10%, preferably by at least 20%.

19. The method of any one of claims 4-18, wherein the capture portion is capable of discriminating a target sequence from another sequence having less than 85% homology with the target.

20. The method of any one of claims 4-19, comprising the use of a consensus primer pair capable of amplifying at least two target sequences having more than 60%, preferably more than 90%, homology, and comprising the use of capture molecules capable of detecting one each of the two target sequences.

21. The method of any one of claims 4-20 wherein the amplicon is detected when present in a solution at a concentration of less than 10 nM, preferably less than 1 nM, more preferably less than 0.1 nM, and even more preferably less than 0.01 nM.

22. The method of any one of claims 4 - 21 wherein the amplicon is detected in real time as it is produced during a series of PCR cycles.

23. A kit for use in a method for detecting an amplicon, said kit comprising the capture molecule of claim 3.

24. The kit of claim 23, further comprising a solid support for immobilizing the capture molecule, said solid support being pretreated to react with the spacer portion of the capture molecule.

25. The kit of claim 23, further comprising a solid support having the capture molecule immobilized thereon.

26. The kit of any one of claims 23 - 25, further comprising the means necessary for carrying out a hybridization of amplicons to the capture molecule.

27. The kit of any one of the preceding claims further comprising primer pairs and labeling means for carrying out PCR.
